# EUROPEAN PATENT SPECIFICATION

(11) **EP 0 464 322 B1**
(45) Date of publication and mention of the grant of the patent: **12.06.1996**
(21) Application number: 91105726.3
(22) Date of filing: 11.04.1991
(51) Int. Cl.: B01D 61/22, C12H 1/06, C12G 3/06

(54) **Automatic plant for the microfiltration of liquids, in particular of wines**
Automatische Anlage für die Mikrofiltration von Flüssigkeiten, insbesondere von Weinen
Installation automatique pour la microfiltration de liquides notamment de vins

(30) Priority: 04.07.1990 IT 8496990
(43) Date of publication of application: 08.01.1992
(73) Proprietor: PERDOMINI SpA, I-37036 San Martino Buon Albergo (VR) (IT)
(72) Inventor: de Mattia, Maurizio, I-21100 Varese (IT)
(74) Representative: Petraz, Gilberto Luigi

(56) References cited:
- EP-A- 0 121 105
- FR-A- 2 586 202
- GB-A- 2 181 363
- US-A- 4 381 999
- US-A- 4 708 790

## Description

The present invention relates to an automatic plant for the microfiltration of liquids.

More particularly, the present application relates to a membrane ultrafiltration plant for liquids, in particular for wines, in which all the operative phases of the filtration process are constantly kept under control and in which different operating conditions may directly set up by an operator and automatically carried out.

The invention may be mainly applied in the field of the oenological industry.

### BACKGROUND ART

Membrane microfiltration processes of liquids are known in the art.

Such processes provide for the use of submicronic filtration systems which are based on the use of semi permeable membranes constituted by selective permeators which form the separation means between two chemical species.

Said selective permeators are generally constituted by polymeric thin films having a very high surface/thickness ratio, the separation between the chemical species taking place thanks to the selective transfer properties, i.e. the different transfer speeds of these films; the thrust force for activating and mantaining the process may be represented by a mechanically imparted pressure, or by a gradient of concentration or of electrical potential or of temperature.

By way of example, such processes are generally carried out in the field of the oenological industry by means of microfiltration plants disposed upstream of wine bottling or barrelling machines.

Other applications of this kind of process may be seen in the field of production of drinkable or industrial water, filtration of turbid solutions, sterile filtration of vinegar, must, beer, removal of particular virusses or bacteria from pharmaceutical solutions, sterile filtration of intravenous solutions.

The microfiltration plants known in the art may be provided with one or more filtration sections; generally, each of the filtration sections has filtering features different from the others, this for carrying out different or successive working phases of the microfiltration process.

By way of example it may be noted that, in the oenological field, the filtration process of a young red wine has particular working phases which are different from those which are necessary for an old red wine and still different from those which are necessary for a white wine.

In order to deviate the flow of the product to be filtered towards specific filtration sections, the known plants are provided with manually operated valves which should respectively be opened or closed by a skilled operator according to particular operating sequences which are typical of the process to be carried out for a given product.

This causes drawbacks and disadvantages, since it requires from the operator a high degree of familiarity with the filtration process for each product; the operator is anyway susceptible of committing errors which are also due to the repeativity of the manual operations to be carried out.

Furthermore, the plant needs to be continuously washed and sterilized, and the membranes must be regenerated; in order to allow the filtration process to be well carried out said membranes should be contantly kept under control by means of suitable sensors for detecting eventual breakings or obstructions.

In order to carry out the washing and the sterilisation of the plant it is still known in the art to provide for manually operated devices, such as valves or gates, which are disposed in the same range of action of the valves which control the process development and which therefore make it even more difficult, for the operator, to operate the plant without committing errors.

Finally, the fact of manually operating the plant involves the further disadvantage of having to provide for a fixed operator in proximity of the plant itself, which is generally placed in noisy, and not devoid of dangers, rooms.

### DESCRIPTION OF THE INVENTION

The present invention aims to obviate to the drawbacks and disadvantages which are typical of the known art, and to provide, therefore, for an automatic microfiltration plant in which all the working phases of the microfiltration process to be carried out for any kind of liquid are controlled and automatically carried out without human intervention.

This is achieved by means of an automatic plant having the features disclosed in the main claim.

The dependent claims describe advantageous forms of embodiment of the invention.

The microfiltration plant of liquids according to the present invention is provided with a series of liquid flow deviating devices, whose operation is electrically controllable.

All the phases of the microfiltration process, as well as the washing, sterilization and membrane regenerating phases are automatically carried out starting from a parameter inputting and displaying device, such as an electronic computer, which provides for controlling the automatic execution of the predetermined working phases in respect of the product to be filtered, as well as of the washing and of the sterilisation of the plant.

### ILLUSTRATION OF THE DRAWINGS

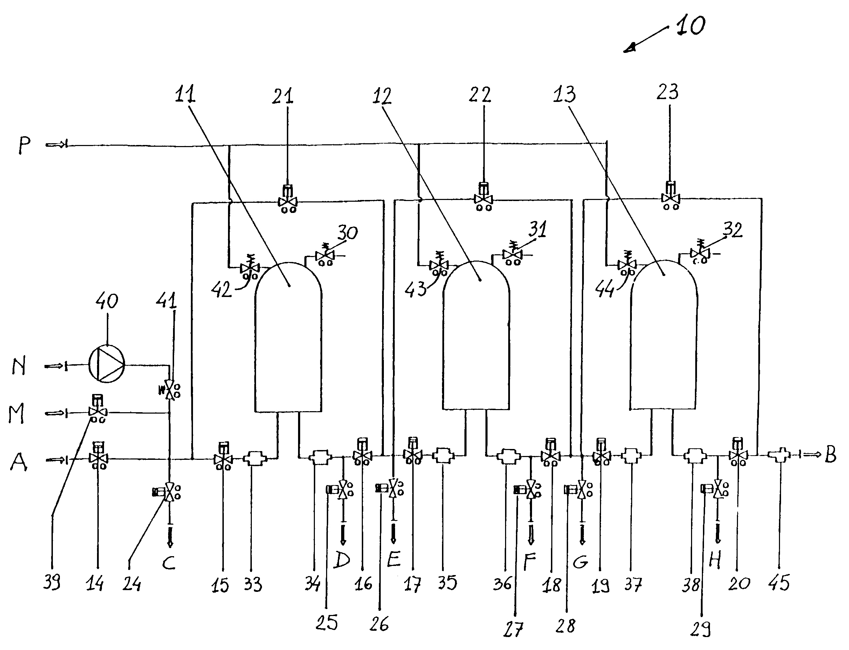

Other advantages and features of the invention will become apparent from reading the following description, of a form of embodiment of the invention, given as a non-limiting example, with the help of the figure illustrated in the attached drawing, which shows a schematic view of a micro filtration plant.

### DESCRIPTION OF A PREFERRED FORM OF EMBODIMENT

In the figure, reference sign 10 generally indicates a plant for the microfiltration of wine.

Plant 10 comprises three filtration sections which are respectively indicated as 11, 12 and 13, of which section 11 acts as a pre-filtration section and sections 12 and 13 act as microfiltration sections; the membranes contained in section 13 are generally provided with pores having a diameter lower than the one of the pores of the membranes belonging to section 12.

Furthermore, plant 10 comprises an inlet pipeline A for supplying the liquid to be filtered and an outlet pipeline B for feeding the filtered product, as well as a series of pneumatically operated valves 14, 15, 16, 17, 18, 19 and 20 for stopping said liquid.

More particularly, valve 14 controls the inlet of liquid into the plant, while the pairs of valves 15-16, 17 18 and 19-20 are respectively disposed close to the entrance and to the exit of the filtration sections 11, 12 and 13.

Furthermore, each filtration section is provided with a by-pass pipeline which is controlled by respective pneumatical valves 21, 22, 23, of which valve 23 controls the by-pass of section 11, valve 22 that of section 12 and valve 23 that of section 13.

Moreover, plant 10 is provided with a series of drain pipelines C-H, which are controlled by respective pneumatical valves 24-29, which are substantially located close to the entrance and to the exit of each filtration section.

Each of the filtration sections 11, 12 and 13 is further provided with a respective breather pipe J, K, L, controlled by an electrovalve 30, 31, 32.

Differential transducers 33-38 are respectively located close to the entrance and to the exit of each of the filtration sections 11, 12, 13, and play the important role of providing informations concerning the state of the membranes contained in said sections.

The above described components of the plant 10 are deemed to be essential for carrying out the microfiltration process as such.

However, the plant comprises further elements, which are suitable for carrying out the washing and the sterilisation of all pipelines.

To this end, a water inlet pipeline M, is disposed in parallel to the main pipeline A, and is controlled by a pneumatical valve 39, and a further pipeline N, to which a dosimetric pump 40, is also disposed in parallel to the main pipeline A and is controlled by a pneumatical valve 41.

Said dosimetric pump 40 provides for the injection into the plant of specific chemical solutions suitable for carrying out, in predetermined doses, the conservation and the sterilisation of the filtration sections.

Finally, the plant is provided with a pressure controlling device which is constituted by an air inlet pipeline P which is connected, by means of suitable electrovalves 42, 43, 44, to each filtration section 11, 12, 13.

The plant is completed by a device 45 for measuring the rate of flow of the filtered product, said device 45 being located close to the outlet pipeline B.

According to the invention, an electronic computer controls all the phases of the microfiltration process.

The various working phases which may be input in the computer, which provides for the automatical execution of the same, are the following:
1. waiting position (all users off);
2. sanitation product drain from section 11;
3. sanitation product drain from sections 11, 12;
4. sanitation product drain from sections 11, 12, 13;
5. rinse of section 11;
6. rinse of sections 11, 12;
7. rinse of sections 11, 12, 13;
8. sterilisation of section 11;
9. sterilisation of sections 11, 12;
10. sterilisation of sections 11, 12, 13;
11. drainage of section 11;
12. drainage of sections 11, 12;
13. drainage of sections 11, 12, 13;
14. membranes check - section 12 - pressure loading;
15. membranes check - section 12 - time control;
16. membranes check - section 13 - pressure loading;
17. membranes check - section 13 - time control;
18. pre-filtration of liquid in section 11;
19. pre- and microfiltration in sections 11, 12;
20. pre- and microfiltration in microfiltration in sections 11, 12, 13;
21. microfiltratrion in sections 12, 13;
22. product discharge - section 11;
23. product discharge - sections 11, 12;
24. product discharge - sections 11, 12, 13;
25. washing section 11;
26. washing sections 11, 12;
27. washing sections 11, 12, 13;
28. washing supplying tank;
29. total drainage;
30. sanitation.

As it may be noted, each working phase corresponds to a sequence of commands which are given by the computer and executed by the various components.

By way of example, we will now describe a practical form of embodiment of the microfiltration process in the oenological field.

### EXAMPLE

### Preparation of mellowed red wines

This operation provides for the use of only pre filtration section 11; therefore, in this case only the following phases, among those cited above, will be input on the computer keyboard: 1, 2, 5, 8, 11, 18, 22, 25, 28, 29 and 30.

It may noted that:
- phase 2 involves the opening of valves 15, 16, 21, 22, 23, 24 and 25;
- phase 5 involves the opening of valves 39, 15, 25, 21, 22 and 23, the opening of electrovalve 30 for a predetermined lapse of time and its subsequent closure;
- phase 8 involves the opening of valves 39, 15, 16, 22 and 23, the opening of electrovalve 30 for predetermined lapse of time and its subsequent closure;
- phase 11 involves the opening of valves 15, 16, 21, 22, 23, 24, 25 and the opening of electrovalve 30;
- phase 18 involves the opening of valves 14, 15, 16, 22, 23 and the opening of electrovalve 30 for a predetermined lapse of time;
- phase 22 involves the opening of valves 15, 16, 21, 22, 23 24, 25 and the opening of electrovalve 30;
- phase 25 involves the opening of valves 39, 15, 25 and the opening of electrovalve 30 for a predetermined lapse of time;
- phase 28 involves the opening of valves 39, 21, 22 and 23;
- phase 29 involves the opening of valves 15, 16, 17, 18, 19, 20, 21, 22, 23, 24, 25, 26, 27, 28, 29 and of electrovalves 30, 31, 32;
- phase 30 involves the opening of valves 39, 15, 16, 17, 18, 19, 20, 21, 22 and 23; furthermore, pump 40 is excited, electrovalve 41 is open and electrovalves 30, 31, 32 are opened for a predetermined lapse of time.

As it has already been stressed, this example of practical realisation of the invention concerns a process in which only the pre-filtration section 11 is used.

In other microfiltration processes also sections 12 and 13 are used, as for instance during the preparation of young red wines or of white wines, these operations involving the opening of several valves in each phase.

The opening diagrams of said valves are not further described, since they are easily deducible from the general diagram shown in the attached figure.

The automatic management of the microfiltration plant by means of a computer involves several advantages in respect of the known manual operation.

Among these advantages, we may respectively list:
- higher plant reliability, since the sequences of operating phases to be carried out are automatically executed, without any possibility of errors;
- possibility of remotely managing the plant, by means of commands imparted from a remotely located operating station;
- possibility of simultaneously managing, starting from a single operating station, of a plurality of plants or of different production lines disposed in parallel;
- possibility of continuously monitoring the execution of the various working phases, also from a remote location and on a paper carrier, with an istantaneous detection of eventual process anomalies;
- possibility of carrying out, in a fully automatic way, detections relative to process parameters, for instance by inserting in the plant temperature, or turbidity detectors, or of sensors suitable for detecting the istantaneous or cumulative rate of flow of the liquid passing through the membranes;
- possibility of automatically recovering the product stagnating in the dead volume of the plant; taking into consideration the quantity and the value of the product, this is an extremely advantageous operation both from the economical and from the ecological points of view, since the polluting drains are reduced in a substantial way.

## Claims

1. Automatic plant (10) for the microfiltration of liquids, in particular of wines, comprising at least one liquid inlet pipeline (A) and a liquid outlet pipeline (B), a pre-filtration section (11) and a pair of microfiltration sections (12, 13), each of said sections (11, 12, 13) being provided with at least one porous filtration membrane being disposed between sair at least one inlet and one outlet pipelines (A, B) and with a breather pipe (J, K, L) controlled by respective electrovalves (30-32), further comprising first means (33-38) for detecting the membrane state, said first means being constituted by pressure differential transducers emitting electrical signals, second electrically and/or pneumatically operable means (M, 39) suitable for allowing said pipelines (A, B) and said pre-filtration and filtration sections (11, 12, 13) to be washed, third electrically and/or pneumatically operable means (N, 40, 41) suitable for injecting into said pipelines (A, B) conservating and regenerating chemical elements for said at least one porous filtration membrane, further comprising fourth electrically and/or pneumatically operable means (C-H, 24-29) for draining the liquid contained in said plant (10), fifth electrically and/or pneumatically operable means (14; 15, 16; 17, 18; 19, 20) for stopping the liquid flow disposed upstream and downstream of said pre-filtration (11) and microfiltration (12, 13) sections, sixth means for data storing and processing, said sixth means being suitable for emitting electrical signals which are respectively able to switch on or off, according to predetermined sequences, said first (33-38), second (39), third (40, 41), fourth (24, 29) and fifth (15-20) means, and seventh electrically and/or pneumatically operable means (21-23) for bypassing the liquid flow towards each of said pre-filtration (11) and microfiltration (12, 13) sections.

2. Plant according to claim 1, comprising at least one pipeline (P) for inletting air under pressure into said one filtration section (11; 12; 13), said pipeline (P) being provided with eighth electrically and/or pneumatically operable means (42-44) for deviating and/or stopping the compressed air flow.

3. Plant according to one of the preceding claims, further comprising devices for measuring the istantaneous or cumulative pressure of said liquid, and/or devices for measuring the rate of flow of said liquid, and/or liquid temperature measuring devices and/or liquid turbidity measuring devices, said devices being electrically operable and controllable.

4. Plant (10) according to one of the preceding claims, wherein second (39) and/or third (41) and/or fourth (24-29) and/or fifth (15-20) and/or seventh (21-23) means are constituted by pneumatically operated valves.

5. Plant (10) according to one of the preceding claims, wherein said eighth (42-44) means are constituted by electrovalves.

6. Plant (10) according to one of the preceding claims, wherein said third means (40, 41) further comprise a dosimetric pump (40).

## Patentansprüche

1. Automatische Anlage (10) zur Mikrofiltration von Flüssigkeiten, insbesondere von Weinen, die mindestens eine Zufuhrleitung (A) und eine Ablaufleitung (B) für die Flüssigkeit, eine Vorfiltrationsektion (11) und ein Paar Mikrofiltrationssektionen (12, 13) umfaßt, wobei jede Sektion (11, 12, 13) mit mindestens einer porösen Eiltrationsmembrane, die sich zwischen den genannten Leitungen für die Zufuhr und den Ablauf (A, B) befindet sowie mit einer Entlüfterleitung (J, K, L), die von entsprechenden Elektroventilen (30, 32) gesteuert wird, versehen ist, wobei die Anlage (10) ferner erste Mittel (33-38) zur Erfassung des Membranzustands, die aus elekrische Signale aussendenden Druckdifferentialswandlern bestehen, zweite Mittel (M, 39) mit pneumatischer und/oder elektrischer Betätigung, die das Spülen der genannten Leitungen (A, B) und der genannten Vorfiltration- und Mikrofiltrationsektionen (11, 12, 13) ermöglichen, dritte Mittel (N, 40, 41) mit pneumatischer und/oder elektrischer Betätigung, um chemische Konservierungs- und Regenerierungselemente in die Rohre (A, B) der mindestens einer porösen Filtrationsmembrane einzugeben, umfaßt, wobei die genannte Anlage (10) darüberhinaus vierte Mittel mit pneumatischer und/oder elektrischer Betätigung (C-H, 24-29) zum Ablassen der sich in dieser Anlage (10) befindenden Flüssigkeiten, fünfte Mittel mit pneumatischer und/oder elektrischer Betätigung (14; 15, 16; 17, 18; 19, 20) zum Aufhalten des Flüssigkeitssflusses vor und nach der genannten Vor- und Mikrofiltrationssektionen (11, 12, 13), und sechste Mittel zum Erfassen und Verarbeiten von Daten, umfaßt, wobei diese sechsten Mittel elektrische Signale abgeben können, um entsprechend festgesetzter Ablauffolgen jeweils die genannten ersten (33-38), zweiten (39), dritten (40, 41), vierten (24, 29) und fünften (15, 20) Mittel, wie auch siebten Mittel (21-23) mit pneumatischer und/oder elektrischer Betätigung zum Umleiten des Flüssigkeitssflusses zu einjeder der genannten Vor- und Mikrofiltrationssektionen (11, 12, 13), in Betrieb ein- oder auszusetzen.

2. Anlage nach Anspruch 1, die mindestens eine Leitung (P), um Luft unter Hochdruck in die genannte eine Filtrationssektion (11; 12, 13) zu führen, umfaßt, wobei diese Leitung (P) mit achten Mittel (42-44) mit pneumatischer und/oder elektrischer Betätigung, um den Druckluftfluß umzuleiten oder aufzuhalten, versehen ist.

3. Anlage nach einem der vorherigen, Ansprüche, die ferner Vorrichtungen zur Messung des Moments- und Gesamtdrucks der Flüssigkeit und/oder Vorrichtungen zur Durchsatzmessung der Flüssigkeit, und/oder Vorrichtungen zur Temperaturmessung, und/oder Vorrichtungen zur Trübemessung umfaßt, wobei diese Vorrichtungen mit pneumatischer und/oder elektrischer Betätigung sind.

4. Anlage (10) nach einem der vorherigen Ansprüche, in der die zweiten (39) und/oder die dritten (41) und/oder die vierten (24-29) und/oder die fünften (15-20) und/oder die siebten (21-23) Mittel aus pneumatisch betätigten Ventilen bestehen.

5. Anlage (10) nach einem der vorherigen Ansprüche, in der die genannten achten Mittel (42-44) aus Elektroventilen bestehen.

6. Anlage (10) nach einem der vorherigen Ansprüche, in der die genannten dritten Mittel (40, 41) weiterhin eine Dosierpumpe (40) umfassen.

## Revendications

1. Installation automatique (10) pour la microfiltration de liquides, en particulier de vins, comportant au moins une conduite d'entrée (A) du liquide et une conduite de sortie (B) du liquide, une section de préfiltration (11) et une paire de sections de microfiltration (12, 13), chacune desdites sections (11, 12, 13) étant dotée d'au moins une membrane poreuse de filtration disposée entre lesdites conduites d'entrée et de sortie (A, B) ainsi que d'une conduite d'échappement (J, K, L) contrôlée par des électrovalves respectives (30-32), comportant en outre premiers moyens (33-38) pour détecter l'état de la membrane, lesdits premiers moyens étant constitués par des transducteurs d'un différentiel de pression émettant des signaux électriques, deuxièmes moyens à actionnement électrique et/ou pneumatique (M, 39), aptes à permettre le lavage desdites conduites (A, B) et desdites sections de préfiltration et de filtration (11, 12, 13), troisièmes moyens à actionnement électrique et/ou pneumatique (N, 40, 41), aptes à injecter dans lesdites conduites (A, B) des éléments chimiques de conservation et de régéneration de ladite au moins une membrane poreuse de filtration, de plus comportant quatrièmes moyens à actionnement électrique et/ou pneumatique (C-H, 24-29) pour l'écoulement du liquide contenu dans ladite installation (10), cinquièmes moyens à actionnement électrique et/ou pneumatique (14; 15, 16; 17, 18; 19, 20) pour arrêter le flux du liquide présent en amont et en aval desdites sections de préfiltration (11) et de microfiltration (12, 13), sixièmes moyens d'enregistrement et d'élaboration de données, lesdites sixièmes moyens pouvant émettre des signaux électriques susceptibles d'activer et de respectivement désactiver, suivant des séquences prédéterminées, lesdits premiers (33-38), deuxièmes (39), troisièmes (40, 41), quatrièmes (24, 29) et cinquièmes (15, 20) moyens, ainsi que septièmes moyens (21-23) à actionnement électrique et/ou pneumatique pour dévier le flux de liquide vers chacune desdites sections de préfiltration (11) et de microfiltration (12, 13).

2. Installation selon la revendication 1, comportant au moins une conduite (P) pour injecter de l'air à haute pression dans ladite une section de filtration (11; 12; 13), ladite conduite (P) étant dotée d'huitièmes moyens à actionnement électrique et/ou pneumatique (42-44) pour dévier et/ou arrêter le flux d'air comprimé.

3. Installation selon l'une des revendications précédentes, de plus comportant des dispositifs pour mesurer la pression instantanée ou bien cumulative dudit liquide, et/ou des dispositifs pour mesurer le débit dudit liquide, et/ou des dispositifs pour mesurer la température et/ou des dispositifs pour mesurer la turbidité, lesdits dispositifs étant à actionnement électrique et/ou pneumatique.

4. Installation (10) selon l'une des revendications précédentes, dans laquelles les deuxièmes (39) et/ou troisièmes (41) et/ou quatrièmes (24-29) et/ou cinquièmes (15-20) et/ou septièmes (21-23) moyens sont constitués par des vannes actionnées pneumatiquement.

5. Installation (10) selon l'une des revendications précédentes, dans laquelle lesdits huitièmes moyens (42-44) sont constitués par des électrovalves.

6. Installation (10) selon l'une des revendications précédentes, dans laquelle lesdits troisièmes moyens (40, 41) comportent de plus une pompe dosimétrique (40).
